# EUROPEAN PATENT APPLICATION

(11) **EP 4 726 353 A1**
(43) Date of publication of application: **15.04.2026**
(21) Application number: 24206356.8
(22) Date of filing: 14.10.2024
(51) Int. Cl.: G01N 1/28

(54) **METHOD AND SYSTEM TO GENERATE DISSECTATES**

(71) Applicant: Leica Microsystems CMS GmbH, 35578 Wetzlar (DE)
(72) Inventor: Schlaudraff, Falk, 35578 Wetzlar (DE)
(74) Representative: Schaumburg und Partner Patentanwälte mbB

(57) **Abstract**

In a first aspect, a method is provided for generating dissectates (104) from a biological sample (102) comprising a plurality of regions of interest. The method comprises the following steps: A set of distinguishable cutting outlines is generated, and an image of the biological sample (102) is generated. A set of the regions of interest of the biological sample (102) are cut out by means of a focused light beam (410) to generate a set of dissectates (104). For each region of interest of the set of regions of interest the focused light beam (410) is directed based on a different one of the cutting outlines of the set of cutting outlines. In a further aspect a system (100) for generating dissectates is provided.

## Description

### Technical field

The invention relates to a method for generating distinguishable dissectates from a biological sample. In further aspects, a respective system for generating dissectates is provided.

### Background

A laser microdissection system uses laser light focused through the objective of a microscope to separate a small portion, called a dissectate, from a sample. The sample may be a thin tissue section, for example, that is cut in order to isolate specific cells or other microscopic regions of interest. The separated dissectate is then captured by a collection arrangement for further processing. The collection arrangement may comprise one or more wells to collect the dissectate. Especially when generating a large number of dissectates, it is difficult and inefficient to keep track of the identity of each individual dissectate.

### Summary

It is an object to provide a method and a system that enables efficient tracking of dissectates.

The aforementioned object is achieved by the subject-matter of the independent claims. Advantageous embodiments are defined in the dependent claims and the following description.

In a first aspect, a method is provided for generating dissectates from a biological sample comprising a plurality of regions of interest. The method comprises the following steps: A set of distinguishable cutting outlines is generated, and an image of the biological sample is generated. A set of the regions of interest of the biological sample are cut out by means of a focused light beam to generate a set of dissectates, in particular a first set of dissectates. For each region of interest of the set of regions of interest the focused light beam is directed based on a different one of the cutting outlines of the set of cutting outlines.

The steps of the method may be carried out in the order as listed above. Alternatively, the steps may be carried out in a different order. For example, the regions of interest may be cut out sequentially and prior to each cutting out step, the respective cutting outline may be generated, and/or the image of the biological sample can be generated before or after the set of distinguishable cutting outlines is generated.

In particular, the method enables generating distinguishable dissectates. Thus, each generated dissectate is distinguishable from all other generated dissectates of the set of dissectates. To that end, the generated cutting outlines of the set of cutting outlines differ from each other. In particular, each cutting outline of the set is unique or distinguishable from the other cutting outlines of the set. The outlines may be (two-dimensional) geometric shapes such as simple polygons (for example three- to twelve-sided/edged shapes, such as triangle, rectangles, parallelograms, triangles and stars), ellipses, circles, or combinations thereof, such as semicircles. Further examples of cutting outlines include more complex shapes, which may be generalised in geometric terms as closed curves, in particular with edges that do not intersect, ie. simple closed curves.

Ultimately, the method enables generating dissectates that may be recognised or identified by their outline as generated from the respective cutting outline.

The biological sample may be tissue sample such as a biopsy. The biological sample may be prepared as a tissue section, for example. The biological sample may therefore comprise a plurality of individual cells. Each of the regions of interest may comprise one or more of these individual cells or parts thereof.

The step of imaging of the biological sample may be carried out by means of an optical device such as a microscope. In particular, the optical device may be part of a laser microdissection system. The step may further include identifying of the regions of interest of the biological sample as well as determining their respective location within the biological sample. The regions of interest are, in particular, potential targets to generate dissectates of and to isolate from the rest of the biological sample. The regions of interest may be user selected in response to the generated image or the regions of interest may be automatically selected, for example based on predetermined criteria.

The focussed light beam may be a laser beam, for example generated by means of the laser microdissection system. In order to cut out the regions of interest, the light beam is directed onto the biological sample around each region of interest. Prior to cutting out of the set of regions of interest, the cutting outlines may be scaled or fitted in size or orientation onto the biological sample such that the respective regions of interest fit within the outline.

When the dissectates are generated by cutting out the regions of interest, the shape or geometry of the respective cutting outline is transferred upon the dissectates. In particular, the edge or outline of the dissectates is formed according to the respective cutting outline. Similarly, the respective cutting outline is transferred to the biological sample around the region of interests. Thus, the biological sample may have a plurality of holes that match in shape to the respective dissectates that have been cut from the biological sample. A further image of the biological sample could be generated after the respective dissectates have been cut from the biological sample, for example for purposes of quality control of the cutting out method step.

Preferably, outline information based on the cutting outline used to generate each dissectate is associated with the respective dissectate.

The association between the outline information and the dissectates enables identification of the dissectates based on their outline or shape. Moreover, information about the region of interest from which each dissectate was cut out from may be associated with the respective dissectate. This further enables identifying the region of interest based on the outline or shape of the dissectates. Since the outline information is based on the cutting outlines, each outline information of the cutting outlines of the first set of cutting outlines is distinguishable from outline information of another one of the cutting outlines of the first set of cutting outlines.

For example, for associating the outline information with the dissectates a table may be provided that lists the dissectates and the respective outline information and/or region of interest for each dissectate. This enables retrieving a specific dissectate from a plurality of dissectates, determining its shape, comparing it to the table of outline information, and identifying or recognising the specific dissectate based on the dissectate associated with the particular outline information in the table.

Preferably, the outline information includes at least one of an aspect ratio, a circularity parameter, a diameter, a number of edges, a shape, or an angle between edges of the respective cutting outline. These parameters enable unambiguously determining and describing the geometry or shape of each dissectate.

Alternatively or additionally, a position of the cutting outline used to generate each dissectate is determined relative to the biological sample. In particular, this positional information of the cutting outline relative to the biological sample may be associated with the respective dissectate. For example, a coordinate system may be overlaid onto the generated image of the biological sample. Thus, the positional information may include the position of each of the cutting outlines used to generate the dissectates relative to the coordinate system. Preferably, the positional information of each dissectate is associated with the respective dissectate, for example using the table, which may also include the outline information. For example, x and y coordinates of the coordinate system may be used for cutting. In particular, to make the cutting with a system for generating dissectates from a biological sample possible, the coordinate system may be translated to the stage and/or camera coordinate system of the system for generating dissectates to ensure cutting the correct dissectate. The positional information may further include a spatial context of the dissectate within the (complex) tissue microenvironment and be used for further analysis of the content of each dissectate in relation to its microenvironment.

Preferably, the generated dissectates are collected in a (first) reservoir. In particular, the dissectates may be collected after cutting them out of the biological sample and removing them from the biological sample. For example, the reservoir may be arranged below the biological sample and the dissectates may fall into the reservoir by gravity. The dissectates, in particular of the first set, may all be collected and pooled in a single reservoir. This enable efficiently collecting the dissectates with a reduced space and/or consumable requirement.

Preferably, a second set of dissectates is generated by cutting out a second set of regions of interest and using the set of distinguishable outlines, and the second set of dissectates is collected in a second reservoir. The second reservoir is different and/or separate from to the (first) reservoir. Thus, the first set of dissectate may be kept separate from the second set of dissectates in the respective reservoirs. The different sets of dissectate are preferably not mixed. Since the dissectates collected in each of the reservoirs are generated based on the set of distinguishable outlines, each dissectate in each reservoir is distinguishable from other dissectates collected in that reservoir. The particular reservoir, in which one of the dissectates is collected in, may be associated with that dissectate, for example, in the table further comprising at least the outline information. This enables identifying, which dissectates are collected in a particular one of the reservoirs.

Preferably, the biological sample is stained, in particular, priorto imaging the biological sample. This enables identifying structures of the biological sample that have been stained. The staining may be a brightfield or fluorescent stain. Thus, a staining agent may be applied comprising chromophores and/or fluorophores. The staining may be a standard histology staining such as a haematoxylin-eosin stain, or target more specific structure using markers comprising affinity reagents such as antibodies. The staining may be used as a further dimension to generate distinguishable dissectates, in particular in addition to the cutting outline or outline information. Conversely, the staining may enable or aid identifying the regions of interest in the biological sample. Each region of interest may have unique structures that may be stained differently. The stained structures may aid identifying the regions of interest as those parts of the biological sample that contain the unique structures.

It is particularly preferred that staining information based on the stained regions of interest is associated with the respective dissectate. This enables identification of the dissectates based on a plurality of distinguishable parameters and therefore improve the reliability of identification of dissectates. The staining information may be optical properties, such as excitation/emission wavelength or lifetime, of staining reagents used for the staining. Further, the staining information may be a colour of the regions of interest and therefore of the corresponding dissectates that results from the staining. This colour may be determined when generating the image of the biological sample after staining the biological sample, for example. Thus, in a particular embodiment, each dissectate may have staining information and outline information associated with it, for example using a table. Therefore, the dissectates may subsequently be identified or recognised based on their colour and their shape. This increases the amount of possible distinguishable dissectates that may be generated using each set of distinguishable cutting outlines.

Preferably, the dissectates are imaged and properties of the dissectates are identified in each image in order to identify the respective dissectate. This enables efficiently identifying the dissectates. For example, properties of the dissectates identified in each image may be based on the outline information and/or the staining information. In particular, the shape of the edges or the outline of the dissectates may be determined and compared to the previously generated table of outline information and/or staining information. Thus, based on the outline information and/or staining information associated with each dissectate, the imaged dissectates may be identified. The dissectates may be imaged using an optical device either in a static/stationary mode or in a flow-through mode. For example, the optical device may be a microscope or an imaging flow cytometry device. A microfluidic device may be used to move the dissectates across a focal plane of the optical device in order to image the dissectates. In particular, the dissectates may be imaged individually, for example, the dissectates may be moved across the focal plane one by one using the microfluidic device. The step of imaging the dissectates is preferably performed after generating the dissectates and collecting them in the reservoir.

Preferably, the dissectates are individualised into individual reservoirs. This enables reliably keeping track of each of the dissectates. In particular, the collected and pooled dissectates may each be individualised into several individual reservoirs, such as wells of a microwell plate. The individualisation of the dissectates may be performed after imaging and identifying of the dissectates.

Preferably, an identity of the individual reservoir a particular one of the dissectates is individualised into is associated with the particular one of the dissectates. This enables efficiently generating the dissectates whilst reliably keeping track of each of the dissectates. In particular this enables generating and processing a large number of dissectates efficiently, but also individually. For example, the table comprising the outline information and/or staining information may be complemented with information on the identity of the individual reservoir each dissectate is individualised into. Thus, using the table it can be determined which dissectate is contained in which well or individual reservoir. In a particular embodiment, the dissectates are initially collected and pooled in the single reservoir in order to quickly generate and collect a large number of dissectates. Subsequently, the collected and pooled dissectates may be individualised and processed for further (individual) analysis. In combination with imaging and identifying the dissectates this enables reliably keeping track of the large number of dissectates without having to immediately individualise the dissectates after their generation. The imaging of the dissectates may be performed prior to individualisation or after individualisation of each dissectate into the respective individual reservoir.

Preferably, the cutting outlines of the set of cutting outlines are generated sequentially and the regions of interest of the set of regions are cut out sequentially, such that for a particular one of the regions of interest a cutting outline is initially generated and after cutting out the particular one of the regions of interest the cutting outline for the next region of interest is generated. This enables flexible processing of biological samples and generation of the dissectates, in particular, when the final number of regions of interest and/or dissectates is initially unknown.

When generating the cutting outlines sequentially, the step preferably includes checking that each subsequent cutting outline is distinguishable from previously generated outlines of the set of cutting outlines. This may in particular include considering a resolution of the optical device used for imaging the dissectates. The resolution of the optical device may determine, which parameters of the outline information may be determined in the generated images of the dissectates. In case a subsequent cutting outline is determined to be indistinguishable from previously generated outlines, a second set of dissectates may be generated, which are collected into a second reservoir. This enables reusing previously generated cutting outlines.

Preferably, each cutting outline is generated based on a particular one of the regions of interest. In particular, the cutting outlines may be generated based on the geometry or shape of the particular one of the regions of interest. This enables fitting the cutting outline to the shapes of the regions of interest and avoiding including undesired parts of the biological sample in the cut out dissectates.

In a further aspect, a system for generating dissectates from a biological sample is provided. The system comprises means configured to carry out the method for generating dissectates, in particular as described above. In particular, the system may be a laser microdissection system.

Preferably, the system comprises at least one imaging unit for imaging the biological sample and/or the dissectates. In particular, the system may comprise two imaging units, one imaging unit for imaging the biological sample and one imaging unit for imaging the dissectates. The system preferably further comprises an illumination unit for generating the focused light beam, and at least one reservoir for collecting the set of dissectates, in particular for collecting the set of dissectates in a liquid. The illumination unit and the imaging unit for imaging the biological sample may share some optical elements for directing light to and from the biological sample. The system may further comprise a control unit configured to direct elements of the system to carry out the method, in particular configured to generate the cutting outlines. Such a control unit may comprise an integrated circuit, such as a field programmable gate array.

Preferably, the system comprises a liquid handling unit for individualising the dissectates. For example, the liquid handling unit may comprise a micropipette and/or a microfluidic system. The microfluidic system may further be for collecting the dissectates in a liquid and transporting the dissectates in that liquid. The micropipette may be fluidly connected to the microfluidic system. Through the micropipette the dissectates may be individually dispensed into the individual reservoirs. The liquid handling unit may comprise an optical window for imaging of the dissectates, for example, the micropipette may be transparent and the focal plane of the imaging unit may be arranged in the micropipette such that the dissectates move across the focal plane.

The system has the same advantages as the method. Further, the system may be supplemented with the features of the method described in this document, in particular, the features of the dependent claims of the method.

### Short Description of the Figures

Hereinafter, specific embodiments are described referring to the drawings, wherein:
- Figure 1: is a schematic view of a laser microdissection system,
- Figure 2: is a flow diagram of a method for generating dissectates,
- Figure 3: is a schematic view of a biological sample with cutting outlines overlaid,
- Figures 4A, 4B, 4C: are schematic views of an alternative collection arrangement, and
- Figure 5: is a schematic view of a micropipette for individualising dissectates.

### Detailed Description

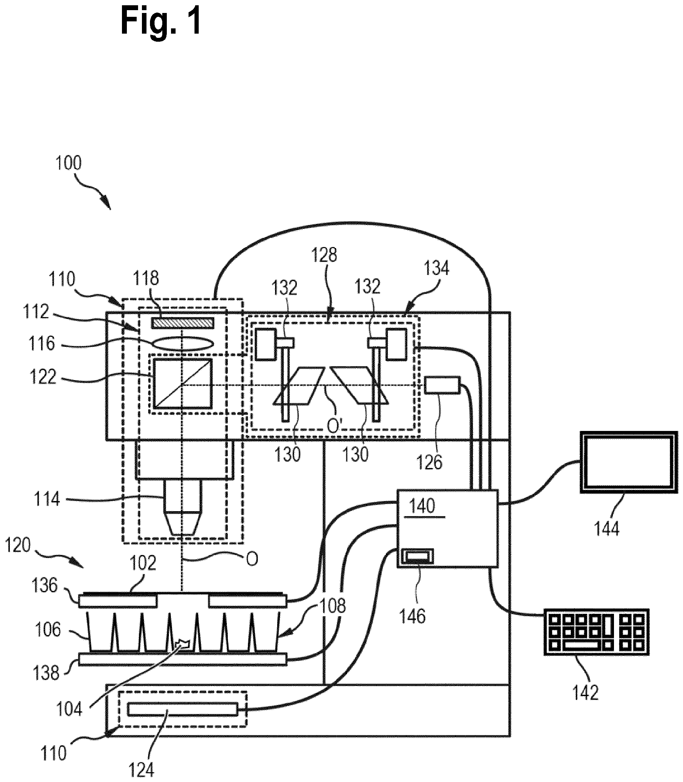

Figure 1 is a schematic view of a system for generating dissectates, in particular of a laser microdissection system 100. The laser microdissection system 100 is configured to receive a biological sample 102 and generate dissectates 104 from the biological sample 102. Each dissectate 104 is a small part of the biological sample 102 cut out from the same. The dissectates 104 may be collected in reservoirs such as wells 106 of a collection arrangement 108 arranged below the sample 102. The sample 102 may be a tissue section, arranged on a membrane on a metal frame, for example. Regions of interest may be separated from the sample 102 and collected as the dissectates 104. For example, regions of interest may be individual cells or cell clusters of the biological sample 102, or other microscopic features of the sample 102 that are of particular interest for further analysis.

In Figure 1, the collection arrangement 108 is exemplary shown as a multiwell plate. The wells 106 of the collection arrangement 108 may also be formed by one or more Petri-dishes, or by similarly suited reservoirs. The collection arrangement 108 and/or individual wells 106 may be removable, allowing the dissectates 104 to be further processed.

The laser microdissection system 100 comprises a microscope 110 having an optical detection system 112 for capturing images of the sample 102. The optical detection system 112 comprises an objective 114, a tube lens 116, and a detector 118. Further optical elements, such as lenses, filters, and apertures (not shown), may be part of the optical detection system 112. The objective 114 is directed at a sample space 120 in which the sample 102 is arranged. The objective 114 is further configured to receive detection light from the sample 102. The detection light is directed by the objective 114 towards the detector 118 via the tube lens 116. The detector 118 is configured to generate the images of the sample 102 from the detection light. In the present embodiment, a beam splitter 122 is arranged between the objective 114 and the tube lens 116. The beam splitter 122 is configured to direct the detection light towards the detector 118 via the tube lens 116. The beam splitter 122 may be a dichroic beam splitter, for example. An illumination system 124 is also part of the microscope 110 and configured for illuminating the sample 102. The illumination system 124 is exemplary arranged below the sample 102. The illumination system 124 may also be arranged above the sample 102 and be configured for incident light illumination. The microscope 110 may further be configured to illuminate the sample 102 via the objective 114.

The laser microdissection system 100 further comprises a laser light source 126 configured to generate a focused (manipulation) light beam. The laser light source 126 may comprise one or more pulsed lasers for generating pulsed laser light from which the focused light beam is formed. The manipulation light beam is focused into the sample space 120 by the objective 114. Using the manipulation light beam the dissectates 104 can be separated from the sample 102, for example by cutting out the dissectates 104 from the sample 102 using the focused light beam. In the present embodiment, the focused light beam is directed into the objective 114 via the beam splitter 122 which is arranged in a beam path between the laser light source 126 and the objective 114. The beam splitter 122 splits a main beam path originating at the sample 102 into two distinct beam paths, one beam path extending towards the detector 118 and another beam path extending to the laser light source 126. Thereby, the beam splitter 122 allows the objective 114 to be used for both imaging and for directing the manipulation light for separating the dissectates 104.

In order to direct the focused light beam in the sample space 120, in particular across the biological sample 102, the laser microdissection system 100 comprises a scanning unit 128. The scanning unit 128 is arranged between the laser light source 126 and the objective 114. In the present embodiment, the scanning unit 128 comprises two prisms 130 arranged in the beam path between the laser light source 126 and the beam splitter 122. The two prisms 130 are arranged rotatable around the optical axis O' of said beam path and configured to deflect the manipulation light beam depending on their rotation. Thus, by rotating the two prisms 130, the manipulation light beam can be moved relative to the sample 102 inside the field of view of the objective 114. The scanning unit 128 further comprises a drive unit 132 for each of the two prisms 130. The two drive units 132 are configured to rotate the prisms 130 independently of each other. In the present embodiment, the beam splitter 122 and the scanning unit 128 form a dissection unit 134 of the laser microdissection system 100 that is configured to couple the focused light beam into the microscope 110 using the beam splitter 112, and to move the focused light beam in the sample space 120 using the scanning unit 128.

The sample 102 is arranged in the sample space 120 on a sample positioning unit 136 of the laser microdissection system 100. In Figure 1, the sample positioning unit 136 is exemplary formed as a microscope stage having an opening, which allows the dissectates 104 to fall into the wells 106 of the collection arrangement 108 due to gravity. The sample positioning unit 136 is configured to move the sample 102 relative to an optical axis O of the objective 114. In particular, the sample positioning unit 136 is configured to move the sample 102 in a plane perpendicular to the optical axis O of the objective 114, i.e. in the x- and y-directions, and may also be configured to move the sample 102 in the direction of the optical axis O, i.e. in the z-direction. By means of the sample positioning unit 136, the sample 102 can be automatically and precisely positioned in a field of view of the objective 114. Thereby, a specific area of the sample 102 from which one or more dissectates 104 are to be removed can be brought into the field of view.

The laser microdissection system 100 also comprises a well positioning unit 138. The well positioning unit 138 is configured to move the collection arrangement 108 relative to the body of the laser microdissection system 100. In particular, the well positioning unit 138 is configured to move the collection arrangement 108 relative to the optical axis O of the objective 114, i.e. in the x- and y-directions. Using the well positioning unit 138 one of the wells 106 of the collection arrangement 108 may be positioned under the sample 102 such that dissectates 104 cut from the sample 102 may be collected in said well 106.

The laser microdissection system 100 further comprises a controller 140, an input unit 142, and an output unit 144. The controller 140 is configured to receive a user input via the input unit 142, and to display visual information to the user via the output unit 144. The input unit 142 is exemplary shown to comprise a keyboard. However, the input unit 142 may also comprise a computer mouse, a stylus for use with a touch screen, or other suitable input devices. The output unit 144 is exemplary shown as a monitor. The input unit 142 and the output unit 144 may also be a single element, for example a touch screen. The controller 140 further comprises an external interface 146 and is configured to receive data via the external interface 146. The external interface 146 may comprise a connector for a storage device, for example a flash drive, and/or a connection to a computer network, such as a local area network or the internet.

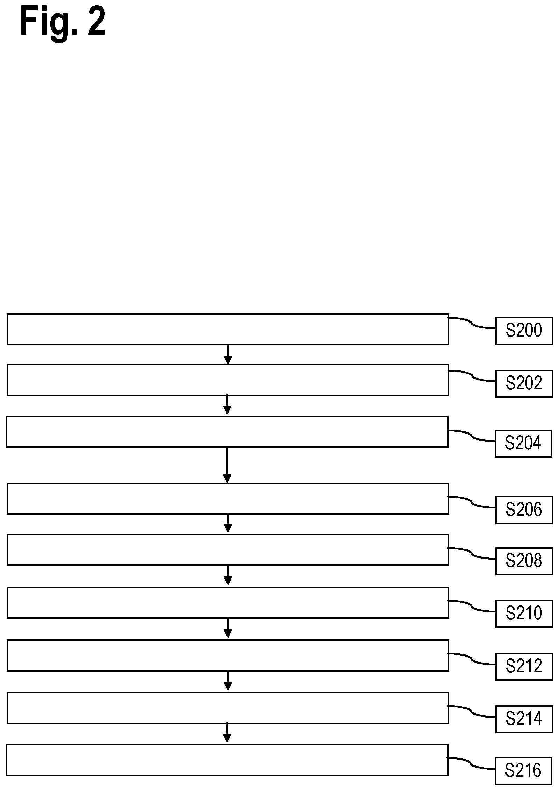

Further, the controller 140 is configured to perform at least some steps of a method for generating dissectates 104 from the biological sample 102. In order to perform the method, the controller 140 is configured to control at least the drive units 132 of the scanning unit 128 in order to rotate the prism 130 and direct the focused light beam across the biological sample 102. The controller 140 may be configured to also control at least one of the following elements: the optical detection system 112, the illumination system 124, the laser light source 126, the sample positioning unit 136, and the well positioning unit 138. The method will be described in more detail below with reference to Figure 2.

Figure 2 is a flow chart of the method for generating dissectates 104 from the biological sample 102 comprising a plurality of regions of interest. The method is described as being performed using the laser microdissection system 100 according to Figure 1 as an example only.

The method is started in step S200. In step S202, a set of distinguishable cutting outlines are generated. A cutting outline relates to a closed curve around a region of interest of the sample 102 and along which the region of interest may be cut out in order to generate the dissectate 104.

The cutting outlines may be generated based on a user input, based on the regions of interest of the biological sample 102, based on the type of biological sample 102, or the cutting outlines may be generated only with the requirement that they are distinguishable from each other. In particular in the latter case, the controller 140 may be configured to generate the set of distinguishable cutting outlines. The cutting outlines may also be generated by an external source. For example, the cutting outlines are generated on an external device and transferred to the laser microdissection system 100 via the external interface 146.

In step S204, the biological sample 102 is imaged, in particular by means of the microscope 110. Based on the image generated of the biological sample 102, regions of interest may be identified and/or located on the biological sample 102. For example, the regions of interest may be a particular cell type, cellular structure, or cell cluster of the biological sample 102. The regions of interest may be automatically identified and/or located on the biological sample 102, for example by means of the controller 140. For example, the image generated of the biological sample 102 may be processed by image processing methods, such as image segmentation, to determine relevant features of the biological sample 102 in the image. Alternatively or in addition, the regions of interest may be identified and/or located by a user. For example, a user may mark an area of the sample 102 on an image of the sample 102 using the input unit 142. The image of the sample 102 may be displayed to the user via the output unit 144. From the outline drawn by the user on the image of the sample 102, a region of interest may be identified by the controller 140, for example.

In an optional additional step prior to step S204, the biological sample 102 may be stained, for example, in order to aid in visualising specific features of the biological sample 102 and to help identifying and/or locating of the regions of interest. Staining information might be obtained from the image after the biological sample 102 is imaged.

In step S206, the regions of interest of the biological sample 102 are cut out. To that end, the focused light beam generated by means of the light source 126 may be directed across the biological sample 102 by means of the scanning unit 128. In particular, the biological sample 102 is scanned with the focused light beam in the shape of the cutting outlines around the regions of interest in order to cut the regions of interest from the biological sample 102 and generate the dissectates 104.

In particular, step S206 may comprise fitting one of the cutting outlines generated in step S202 onto around each region of interest. This may include scaling the cutting outlines such that the entire region of interest is encompassed by the respective cutting outlines. This step may be performed by the controller 140. Further, this may be (partially) based on user input, for example a user may mark an area of the sample 102 on an image of the sample 102 using the input unit 142. The image of the sample 102 may be displayed to the user via the output unit 144. From the outline drawn by the user on the image of the sample 102, a suitable cutting outline may be determined by the controller 140, for example. In addition, the controller 140 may optionally use the user input to generate a cutting outline distinguishable from the cutting outlines of the set of cutting outlines that have already been generated and/or assigned to a region of interest.

In particular, steps S202 and S206 may be performed concurrently or consecutively. For example, for a single cutting outline may initially be generated in step S202. Prior to that step S202 or after that step S202, step S204 may be performed to generate an image of the biological sample. Subsequently, step S206 may be performed to generate a single dissectate 104 by cutting out a region of interest using the single cutting outline initially generated. The steps S202 and S206 may subsequently be repeated in order to generate further dissectates 104 from the biological sample 102.

With each repetition of step S202, a further cutting outline is generated. Each further cutting outline is generated such that it is distinguishable based on outline information for each cutting outline. The outline information may include parameters of the cutting outlines such as an aspect ratio, a circularity parameter, a diameter, a number of edges, a shape, or an angle between edges of the respective cutting outline of the respective cutting outline. With each repetition of step S206, a further dissectate 104 is generated. The dissectates 104 are preferably all collected in a single well 106 of the collection arrangement 108 positioned below the respective region of interest. These dissectates 104 may also be referred to as a first set of dissectates.

In case no further cutting outlines can be generated that are distinguishable from the set of cutting outlines previously generated, the method may comprise an optional step S210 of moving the collection arrangement 108 such that a second set of dissectates 104 may be collected in a second well 106 of the collection arrangement 108. The second set of dissectates may be generated (re-)using the cutting outlines generated for the first set of dissectates.

The method may comprise a further optional step S212, in which the outline information of each cutting outline is associated with the respective dissectate 104. For example, a diameter, a number of edges, and angles between edges of a particular cutting outline is associated with the dissectate 104 that was generated by cutting out a region of interest from the biological sample 102 using that particular cutting outline. The outline information may be associated with the dissectates 104 in the form of a table, in which the outline information of each cutting outline is listed to correspond to the one dissectate 104 that was generated by using the respective cutting outline. Thus, each dissectate 104 may be identified or recognised based on the list of outline information in the table.

In a further optional step S214, the generated dissectates 104 are imaged. For example, the dissectates 104 may be imaged by means of a microscope. The dissectates 104 may further be imaged in a microfluidic device, in particular whilst in motion, for example by means of an imaging flow cytometer. Using image processing method, such as image segmentation, the images of the dissectates 104 may be analysed to determine the outline information of each of the dissectates 104. Based on the table of outline information and dissectates, the imaged dissectates may be identified or recognised.

The method ends in step S216.

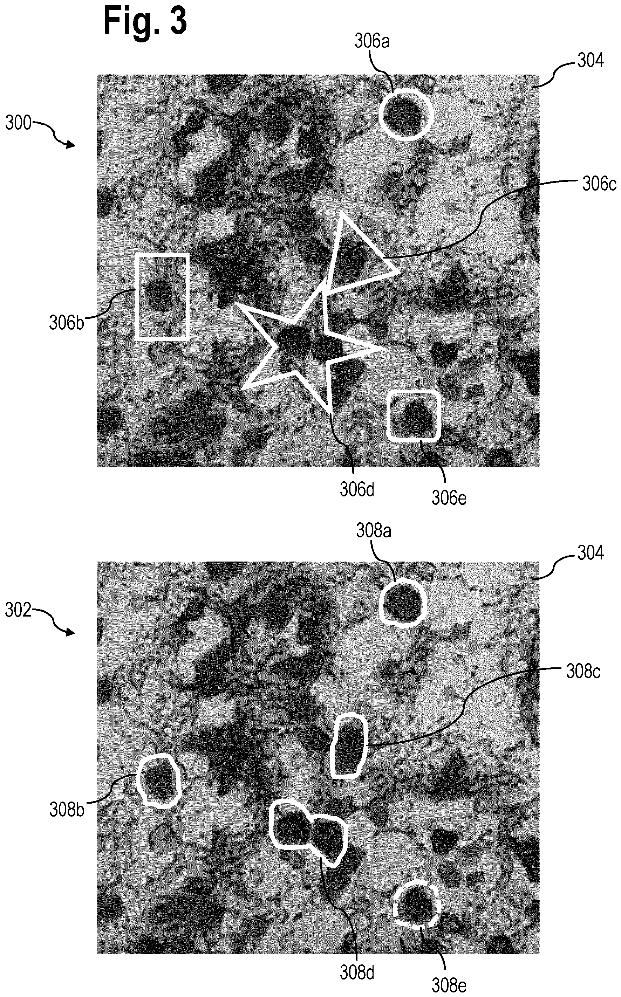

Figure 3 is a first schematic view 300 and a second schematic view 302 of a biological sample 304. The views 300, 302 of Fig. 3 are generated by viewing the biological sample 304 along the axis O of the system 100. The views 300, 302 shows the biological sample 304 overlaid with distinguishable cutting outlines 306a, 306b, 306c, 306d, 306e, 308a, 308b, 308c, 308d (shown in full lines) around respective regions of interest of the biological sample 304. In view 302 a further cutting outline 308e is shown (dashed line), which is not distinguishable from the distinguishable cutting outlines 306a, 306b, 306c, 306d, 306e, 308a, 308b, 308c, 308d. In particular, outline 308e is identical to outline 308a and therefore indistinguishable from outline 308a. Thus, outline 308e would not be suitable to be used in a set of cutting outlines comprising the cutting outlines 308a, 308b, 308c, 308d.

The first set of cutting outlines 306a, 306b, 306c, 306d, 306e include simple two-dimensional geometric shapes such as circles, rectangles, triangles, stars, and squares with rounded corners. The second set of cutting outlines 308a, 308b, 308c, 308d are more complex shapes generalisable as simple closed curves. Each cutting outline 306a, 306b, 306c, 306d, 306e, 308a, 308b, 308c, 308d is essentially centred on one region of interest of the biological sample 304. When the biological sample 304 is cut along each of the cutting outlines, respective dissectates 104 are generated in the shapes of the cutting outlines. Thus, each dissectate 104 comprises one of the regions of interest of the biological sample 304 and has a distinguishable shape corresponding to one of the cutting outlines 306a, 306b, 306c, 306d, 306e, 308a, 308b, 308c, 308d.

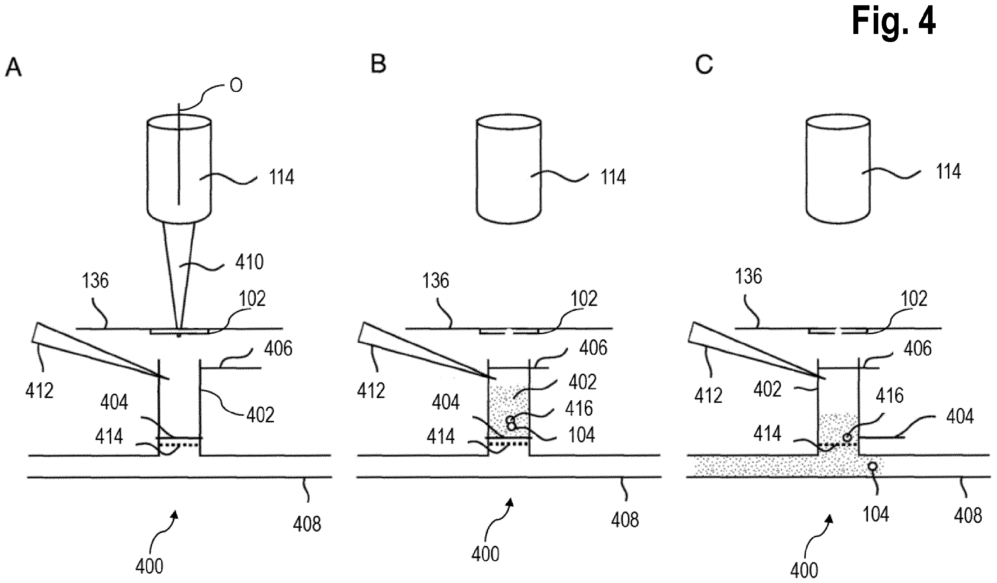

Figure 4 is a schematic view of an alternative collection arrangement 400, in particular for the laser microdissection system 100. The collection arrangement 108 described for the laser microdissection system 100 with reference to Fig. 1 above can be replaced with the alternative collection arrangement 400.

The collection arrangement 400 comprises a collection chamber 402 comprising a first valve 404 and a second valve 406. In a closed state (shown in Fig. 4A, 4B), the first valve 404 seals the chamber 402 on a side distal to the sample 102. The second valve 406 is arranged on a side of the chamber 402 proximal to the sample 102. The second valve 406 is shown in Fig. 4A in an open state, in which the chamber 402 is ready to receive the dissectate cut from the sample 102. The chamber 402 is connected to a microfluidic channel 408 downstream of the first valve 404. The first valve 404 controls the transfer of the dissectate 104 from the chamber 402 to the channel 408.

In order to cut the dissectate 104 from the sample 102, a focused light beam 410 is directed onto the sample 102 following one of the cutting outlines (Fig. 4A). Once the dissectate 104 is cut from the sample 102 it falls into the chamber 402 due to gravity. Several dissectates 104 may be cut from the sample 102 and received in the chamber 402 at the same time. Subsequently and once the desired number of dissectates 104 is cut from the sample 102, the second valve 406 may be closed. Next, the first valve 404 may be opened (Fig. 4C) and the dissectate 104 may be released into the microfluidic channel 408.

Optionally, the collection arrangement 400 may comprise an injector 412 for adding a liquid, such as a buffer solution, into the chamber 402. The injector 412 may also be used to flush the dissectate 104 into the microfluidic channel 408. The collection arrangement 400 may further comprise a filter 414, for example, to retain parts of the sample 102, in particular to retain a membrane fragment 416 on which a tissue section is initially mounted.

Further details of the collection arrangement 400 are described in the document DE 10 2013 209 455 A1.

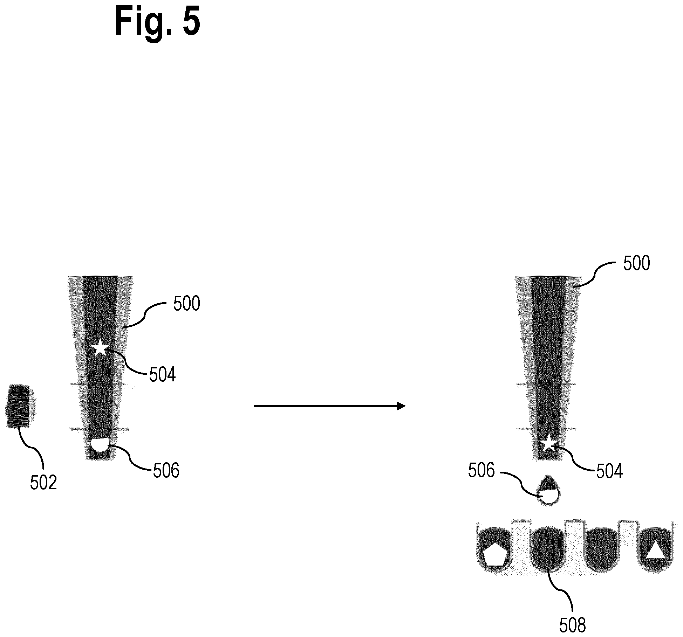

Figure 5 is a schematic view of a micropipette 500 for individualising the dissectates 104. The micropipette 500 may be used to aspirate dissectates in a liquid, for example from the wells 106 of the collection arrangement 108. Alternatively, the micropipette 500 may be connected to the collection arrangement 400, in particular to the microfluidic channel 408. Micropipette 500 may be part of an imaging unit for imaging the dissectates 104. The imaging unit may comprise at least one front lens 502 arranged such that a focal plane is arranged in an internal volume of the micropipette 500. Thus, the imaging unit may image the dissectates 104 moving through the micropipette 500. There may be a second or more imaging units (not shown) arranged such that images of the dissectates 104 can be acquired from different perspectives or viewing directions.

In Fig. 5, the micropipette 500 is shown containing a star shaped dissectate 504 and a partial circle shaped dissectate 506, which has a circular segment removed. As the dissectates 504, 506 are dispensed from the micropipette 500, they move through the focal plane of the imaging unit. For the generated images, the outline information of the dissectates 504, 506 may be determined and compared to the outline information previously associated with the dissectates 504, 506 when they were cut out of the sample 102 using respective cutting outlines. This enables determining the identify or recognising the dissectates 504, 506. The dissectates 504, 506 may be individualised into individual reservoirs such as separate wells 508 of a microwell plate, by dispensing them into the separate wells 508.

The alternative collection arrangement 400 and/or the micropipette 500 may be part of the laser microdissection system 100, in particular, part of a liquid handling unit of the laser microdissection system 100. In particular, the collection arrangement 108 described with reference to Fig. 1 above can be replaced with the alternative collection arrangement 400.

Identical or similarly acting elements are designated with the same reference signs in all Figures. As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### Reference signs

- 100: Laser microdissection system
- 102, 304: Biological sample
- 104: Dissectate
- 106: Wells
- 108, 400: Collection arrangement
- 110: Microscope
- 112: Optical detection system
- 114: Objective
- 116: Tube lens
- 118: Detector
- 120: Sample space
- 122: Beam splitter
- 124: Illumination system
- 126: Laser light source
- 128: Scanning unit
- 130: Prism
- 132: Drive unit for prism
- 134: Dissection unit
- 136: Sample positioning unit
- 138: Well positioning unit
- 140: Controller
- 142: Input unit
- 144: Output unit
- 146: External interface
- 300, 302: View of biological sample
- 306a, 306b, 306c, 306d, 306e, 308a, 308b,308c,308d: Distinguishable cutting outlines
- 308e: Indistinguishable cutting outline
- 402: Collection chamber
- 404: First valve
- 406: Second valve
- 408: Microfluidic channel
- 410: Focused light beam
- 412: Injector
- 414: Filter
- 416: Membrane fragment
- 500: Micropipette
- 502: Front lens
- 504: Star shaped dissectate
- 506: Partial circle shaped dissectate
- 508: Individual well

## Claims

1. A method for generating dissectates (104) from a biological sample comprising a plurality of regions of interest, comprising the following steps:
generating a set of distinguishable cutting outlines (306a, 306b, 306c, 306d, 306e, 308a, 308b, 308c, 308d),
generating an image of the biological sample (102), and
cutting out a set of the regions of interest of the biological sample (102) by means of a focused light beam (410) to generate a set of dissectates (104), wherein for each region of interest of the set of regions of interest the focused light beam (410) is directed based on a different one of the cutting outlines (306a, 306b, 306c, 306d, 306e, 308a, 308b, 308c, 308d) of the set of cutting outlines.

2. The method according to claim 1, wherein outline information based on the cutting outline used to generate each dissectate (104) is associated with the respective dissectate (104) and/or wherein a position of the cutting outline used to generate each dissectate is determined relative to the biological sample.

3. The method according to claim 2, wherein the outline information includes at least one of an aspect ratio, a circularity parameter, a diameter, a number of edges, a shape, or an angle between edges of the respective cutting outline.

4. The method according to one of the preceding claims, wherein the generated dissectates (104) are collected in a reservoir (106, 402).

5. The method according to one of the preceding claims, wherein a second set of dissectates (104) is generated by cutting out a second set of regions of interest and using the set of distinguishable outlines, and the second set of dissectates is collected in a second reservoir.

6. The method according to one of the preceding claims, wherein the biological sample (102) is stained.

7. The method according to claim 6, wherein staining information based on the stained regions of interest is associated with the respective dissectate (104).

8. The method according to one of the preceding claims, wherein the dissectates (104) are imaged and properties of the dissectates (104) are identified in each image in order to identify the respective dissectate (104).

9. The method according to one of the preceding claims, wherein the dissectates (104) are individualised into individual reservoirs (508).

10. The method according to claim 9, wherein an identity of the individual reservoir (508) a particular one of the dissectates (104) is individualised into is associated with the particular one of the dissectates (104).

11. The method according to one of the preceding claims, wherein the cutting outlines of the set of cutting outlines are generated sequentially and the regions of interest of the set of regions are cut out sequentially, such that for a particular one of the regions of interest a cutting outline is initially generated and after cutting out the particular one of the regions of interest the cutting outline for the next region of interest is generated.

12. The method according to one of the preceding claims, wherein each cutting outline is generated based on a particular one of the regions of interest.

13. A system (100) for generating dissectates from a biological sample (102), the system comprising means configured to carry out the method according to one of the preceding claims 1 to 12.

14. The system according to claim 13, comprising:
at least one imaging unit for imaging the biological sample (102) and/or the dissectates (104),
an illumination unit (124) for generating the focused light beam (410), and
at least one reservoir (106, 402) for collecting the set of dissectates (104).

15. The system according to one of the preceding claims 13 and 14, comprising a liquid handling unit (500) for individualising the dissectates (104).
